Europäisches Patentamt

European Patent Office

Office européen des brevets

(19)

(11) Numéro de publication: **0 274 931**
**B1**

(12) **FASCICULE DE BREVET EUROPEEN**

(45) Date de publication du fascicule du brevet:
**31.10.90**

(51) Int. Cl.⁵: **F01D 17/16**

(21) Numéro de dépôt: **87402722.0**

(22) Date de dépôt: **02.12.87**

(54) **Dispositif de commande d'aubes à calage variable de redresseur de turbomachine.**

(30) Priorité: **17.12.86  FR 8617633**

(43) Date de publication de la demande:
**20.07.88 Bulletin 88/29**

(45) Mention de la délivrance du brevet:
**31.10.90 Bulletin 90/44**

(84) Etats contractants désignés:
**DE FR GB**

(56) Documents cités:
**DE-A- 2 426 824**
**FR-A- 822 695**
**FR-A- 1 021 872**
**FR-A- 1 277 868**
**US-A- 2 933 234**
**US-A- 3 356 288**
**US-A- 3 954 349**
**US-A- 4 035 101**

(73) Titulaire: **SOCIETE NATIONALE D'ETUDE ET DE CONSTRUCTION DE MOTEURS D'AVIATION, "S.N.E.C.M.A.", 2, boulevard du Général Martial Valin, F-75015 Paris(FR)**

(72) Inventeur: **Gonthier, François Lucien, 17, allée des Perce-neige, F-77210 Avon(FR)**
Inventeur: **Marinier, Bernard, 5, Rond-Point de la Garenne, F-77720 Bombon(FR)**

(74) Mandataire: **Molnat, François et al, S.N.E.C.M.A. Service des Brevets Boîte Postale 81, F-91003 Evry Cédex(FR)**

## Description

La présente invention a pour objet les moyens de commande des aubes de redresseur à calage variable pour les compresseurs de turbomachine et notamment de turboréacteur d'aviation, appliqué au cas des redresseurs à calage variable à fort débattement.

On rappelle qu'il existe deux sortes d'anneaux de commande pour les redresseurs à calage variable:

- les anneaux intégrés au carter compresseur, c'est à dire se déplaçant circonférentiellement sur des portées usinées sur la partie extérieure du carter.

- les anneaux externes au carter compresseur, c'est à dire se déplaçant à la fois circonférentiellement et en translation amont/aval en suivant le mouvement angulaire des biellettes de commande reliées aux aubes de redresseur, les seuls points de contact entre l'anneau et la partie externe du carter étant, par exemple des patins destinés à maintenir l'anneau concentriquement au carter.

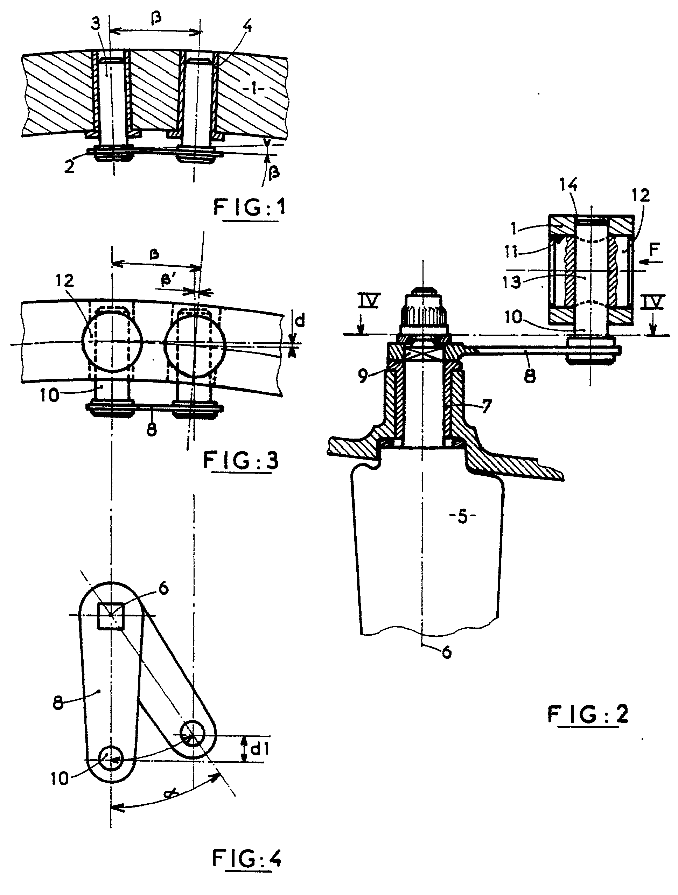

On s'intéresse ici à ce deuxième type d'anneau de commande et on rappelle que dans les moteurs dont les aubes à calage variable n'exigent qu'un faible débattement (voir état de la technique représenté à la figure 1), les biellettes de commande sont montées tournantes dans des douilles radiales de guidage sur l'anneau et subissent une torsion β proportionnelle à l'angle de calage de l'aube. Si le débattement est très faible, ce que représente la figure 1, cette torsion de la biellette est supportable.

Si le débattement devient un peu plus important, le brevet US 4 050 844 propose d'insérer entre l'axe de la biellette et la douille radiale de l'anneau un ressort hélicoïdal en forme de tonneau ou de même forme pour supporter l'effort de torsion. Mais ces éléments intermédiaires sont sertis sur l'axe de la biellette et lorsqu'ils s'usent ou se brisent, c'est la biellette toute entière qu'il faut changer.

D'autre part on s'intéresse ici au cas où l'angle de calage est important et le diamètre du compresseur est réduit, ce qui est de plus en plus souvent le cas dans les moteurs supersoniques à fort taux de compression et à faible encombrement. Les dispositifs précités ne sont alors plus utilisables car les efforts de torsion que doivent supporter les éléments intermédiaires sont trop importants.

Le brevet FR 1 190 067 suggère alors de placer sur l'axe de la biellette une rotule pour remplacer l'effort de torsion par une rotation de la rotule sphérique sur des bagues externes à portées sphériques.

Outre leurs problèmes d'usure, ces joints universels à rotule nécessitent la réalisation d'un grand nombre de pièces et sont parfois lourds et encombrants.

La présente invention a donc pour but de réaliser des dispositifs de commande d'aubes de redresseurs à fort angle de calage, qui soient plus simples et plus légers que les dispositifs à rotule sphérique et qui néanmoins n'introduisent aucun effort de torsion dans les biellettes de commande.

Dans ce but on a déjà prévu de remplacer l'effort de torsion subi par la biellette par une pièce intermédiaire possédant deux degrés de liberté en rotation et un degré de liberté en translation afin de n'introduire aucun effort de torsion.

Ainsi le document FR-A 1 021 872 décrit des aubes à calage variable dont la partie arrière de la plate-forme supérieure comporte une cheville qui s'adapte dans un orifice diamétral percé dans une pièce cylindrique solide disposée dans un logement en arc cylindrique dirigé axialement, d'un anneau de commande.

Si ce dispositif semble répondre à l'objectif de ne pas introduire d'effort de torsion dans le dispositif de commande du calage des aubes, il n'en est pas moins complexe car, la cheville étant portée par la partie arrière de la plate-forme des aubes, l'anneau de commande doit être disposé à l'intérieur du carter, ce qui complique la forme de ce dernier.

D'autre part, si la cheville ou la pièce cylindrique vient à se rompre, des fragments de celle-ci peuvent se bloquer entre les plates-formes de deux aubes adjacentes, ce qui peut bloquer le mécanisme de calage, ou pire encore, les fragments peuvent pénétrer dans la veine et rompre tout ou partie des étages situés en aval.

Pour éviter cet inconvénient, l'invention a donc pour objet de perfectionner un dispositif de commande d'aubes à calage variable pour redresseur de compresseur de turbomachine à fort calage comportant un anneau circulaire actionnant, par sa rotation autour de l'axe longitudinal du carter de la turbomachine, des biellettes solidaires des aubes à calage variable, lesdites biellettes comportant sur leur extrémité des axes orientés radialement, et montés sur l'anneau par l'intermédiaire de noix cylindriques disposées dans des perçages axiaux de l'anneau, lesdits axes étant aptes à coulisser dans un alésage de la noix, orthogonal à son axe de symétrie. Selon l'invention, la noix comporte une partie centrale de fort diamètre entourée de deux tourillons de faible diamètre tandis que l'anneau de commande est constitué de deux parties annulaires assemblées par vis et comportant chacune des perçages coaxiaux pour recevoir les tourillons de la noix, et que ledit axe de chaque biellette traverse un perçage radial de l'anneau.

D'autres particularités et variantes d'exécution seront explicitées ci-dessous en regard des figures annexées parmi lesquelles:

– la figure 1 montre un exemple de biellette selon l'état de la technique actuelle dont l'effort de torsion qu'elle subit est refusé ici;

– la figure 2 montre une réalisation d'un dispositif de commande selon l'état de la technique voisin de celui présenté par le document FR-A 1 021 872.

– la figure 3 en est une vue suivant F de la figure 2;

– la figure 4 montre en vue IV-IV de la figure 2 les déplacements de l'axe de la biellette et de l'anneau;

– la figure 5 montre un mode de réalisation de l'invention et la figure 6 en est une variante;

– la figure 7 montre un moyen d'autocentrage de l'anneau sur les biellettes;

– la figure 8 (8a, 8b, 8c) montre la réalisation des anneaux de la figure 5;

A la figure 1 est représenté un anneau de commande 1 selon l'état actuel de la technique dans lequel sont montées des biellettes 2 dont l'axe 3 pivote dans une douille de guidage radiale 4. La biellette subit une torsion d'angle égal au déplacement angulaire de l'anneau de commande.

A la figure 2 est montré un dispositif de commande selon l'état de la technique proche du document FR-A 1 021 872. Une différence par rapport à ce document vient de ce que l'anneau de commande est extérieur au carter et que de ce fait l'entraînement de l'aube est effectué par une biellette 8.

L'aube 5 de redresseur de compresseur (dont seule la partie supérieure est représentée) peut tourner sur son axe 6 dans une douille 7, sa rotation étant entraînée par la biellette 8 fixée sur l'axe de l'aube par un carré d'entraînement 9.

A l'extrémité de la biellette est serti un axe 10 radial par rapport à l'axe longitudinal de la turbomachine. L'anneau de commande 1 comporte des perçages 11 axiaux, c'est à dire parallèles à l'axe longitudinal de la turbomachine, dans lesquels sont disposées des noix 12 cylindriques, elles-mêmes percées d'un alésage 13 orthogonal à l'axe de la noix. L'alésage 13 de la noix est disposé en correspondance avec un perçage radial 14 de l'anneau 1. Ainsi (figures 3 et 4), lorsque l'anneau de commande est actionné, il subit un déplacement angulaire ß et un déplacement axial d1, ce qui entraîne un angle de calage α. Ces déplacements linéaires et angulaires, au lieu d'être transformés en effort de torsion sur la biellette sont transformés en un coulissement d'amplitude "d" de l'axe 10 sur la noix 12 et en une rotation d'angle ß' de la noix 12 dans le perçage 11, l'axe 10 tournant bien évidemment d'un angle α dans l'alésage 13 de la noix.

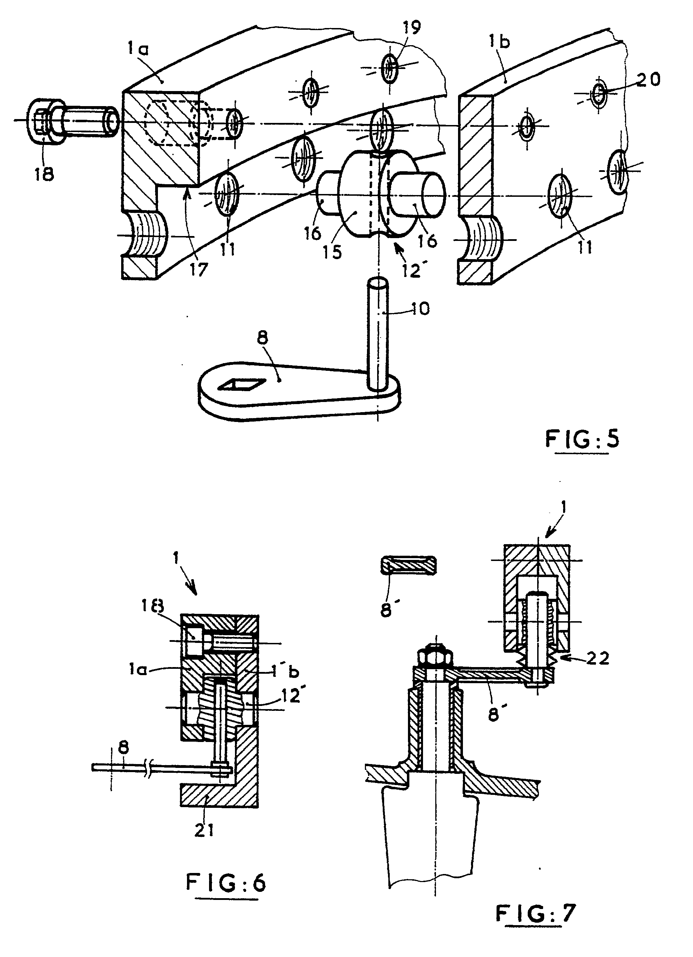

La figure 5 montre un mode de réalisation de l'invention destiné à rendre les noix intermédiaires solidaires au montage de l'anneau de commande. Dans la suite de la description, les références chiffrées identiques à celles de la figure 2 seront conservées.

Dans ce mode de réalisation l'anneau de commande est réalisé en deux parties, l'une amont la et l'autre aval 1b toutes deux circulaires, et la noix 12', comporte une partie centrale 15 de fort diamètre prolongée par deux tourillons 16, la partie centrale 15 étant percée de l'alésage 13 orthogonal à l'axe de symétrie de la noix 12'.

La partie amont la de l'anneau comporte un dégagement 17 destiné à permettre le positionnement de la partie 15 de la noix 12, tandis que les parties 1a et 1b sont assemblées par des vis 18 disposées dans des alésages 19 de la partie 1a et des trous taraudés 20 de la partie 1b.

Ce mode de réalisation a pour intérêt, en cas de rupture accidentel d'une biellette d'interdire à la noix 12' de sortir de son logement dans l'anneau 1.

Pour parfaire ce dispositif, on peut selon la variante de la figure 6 remplacer la partie aval 1b de l'anneau par une partie 1'b modifiée dont la section droite est en forme de L, la branche inférieure 21 du L recouvrant partiellement la biellette 8.

Ainsi en cas de rupture accidentelle de la biellette 8, la partie rompue de la biellette sera maintenue en position dans la noix 12' par la branche 21 de l'anneau 1'b.

Pour rendre purement hypothétiques ces risques de rupture, on pourra donner aux biellettes 8 une section 8' en I telle que représentée à la figure 7 qui par ailleurs montre un autre détail de l'invention. Ainsi les deux demi-anneaux sont simplement symétriques et la biellette ici représentée comporte une rondelle élastique 22 disposée entre la face supérieure de la biellette 8 et la noix 12', ladite rondelle 22 ayant pour fonction d'assurer l'autocentrage de l'anneau de commande 1 sur les biellettes de commande 8.

La rondelle 22 peut être constituée d'une simple rondelle en matériau élastomère ou d'un empilage de rondelles Belleville alternées.

Selon une autre variante non représentée ici, le centrage de l'anneau peut être réalisé sur une portée du carter moteur par des patins de guidage radiaux.

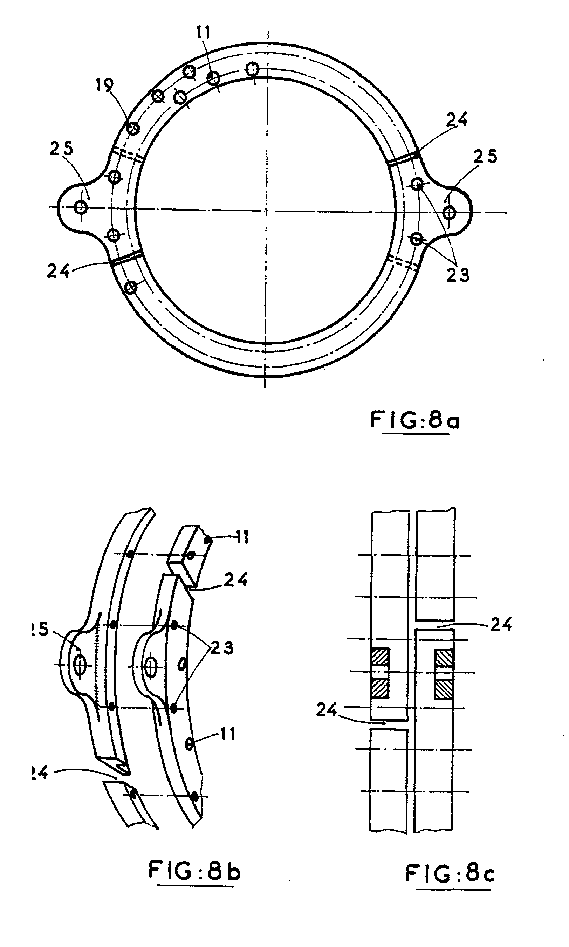

Dans la pratique (figures 8a à 8c), les deux anneaux 1a et 1b peuvent être usinés au tour. Ensuite on usine les perçages, respectivement 19 et 20, destinés à recevoir les vis 18, ainsi que des perçages 23 pour recevoir des pions de centrage destinés à faciliter le montage des anneaux 1a et 1b l'un sur l'autre.

Enfin chaque anneau est sectionné en 24 en deux demi-anneaux identiques. Les chapes de commande 25 (destinées à recevoir un vérin de commande hydraulique ou à vis assurant la rotation de l'anneau) peuvent être intégrées à l'anneau ou rapportées et fixées avec les vis de fixation de deux demi-anneaux.

Telle que décrite ci-dessus, dans ces diverses variantes, l'invention permet de simplifier les moyens de liaison entre biellette et anneau de commande et d'alléger ces dispositifs notamment en permettant de réaliser les noix intermédiaires par exemple en matériau composite moulé du genre connu sous le nom commercial "VESPEL SP 21" ou encore en acier Z100 CD 17.

L'invention permet donc une simplification appréciable des dispositifs connus.

## Revendications

1. Dispositif de commande d'aubes à calage variable pour redresseur de compresseur de turbomachine à fort angle de calage comportant un anneau circulaire (1) actionnant, par sa rotation autour de l'axe longitudinal du carter de la turbomachine, des biellettes (8) solidaires des aubes (5) à calage variable, lesdites biellettes comportant sur leur extrémité des axes (10) orientés radialement et montés sur l'anneau par l'intermédiaire de noix (12') cylindriques disposées dans des perçages axiaux (11) de l'anneau, lesdits axes étant aptes à coulisser dans un alésage (13) de la noix orthogonal à l'axe de révolution de ladite noix, caractérisé en ce que lesdites noix (12') comportent une partie centrale (15) de fort diamètre entourée de deux tourillons (16) de faible diamètre, l'anneau de commande étant constitué de deux parties annulaires (1a, 1b) assemblées par vis (18) et comportant chacune des perçages coaxiaux (11) pour recevoir les tourillons de la noix (12'), et en ce que l'axe (10) traverse un perçage radial de l'anneau.

2. Dispositif de commande selon la revendication 1 caractérisé en ce que l'une (1'b) des parties annulaires formant l'anneau de commande a une section droite en L (21) recouvrant partiellement la biellette.

3. Dispositif de commande selon l'une des revendications 1 ou 2 caractérisé en ce que l'anneau (1) est centré par rapport à la face supérieure des biellettes (8) au moyen d'une rondelle élastique (22) disposée entre la face supérieure de la biellette et la noix cylindrique (12').

4. Dispositif de commande selon l'une quelconque des revendications 1 à 3 caractérisé en ce que la noix (12') est réalisée en matériau composite moulé.

**Patentansprüche**

1. Vorrichtung zur Steuerung von Schaufeln mit variabler Anstellung für den Leitapparat eines Turbomaschinen-Verdichters mit großem Einstellwinkel, mit einem kreisförmigen Ring (1), der bei seiner Verdrehung um die Längsachse des Gehäuses der Turbomaschine Pleuelhebel (8) betätigt, die mit den Schaufeln (5) mit variabler Anstellung fest verbunden sind, wobei die Pleuelhebel (8) an ihren Endbereichen in radialer Richtung weisende Achsen (10) haben, die über in axialen Bohrungen (11) des Rings (1) angeordnete zylindrische Muffen (12') an dem Ring (1) montiert sind, und wobei diese Achsen in einer zur Drehachse der Muffe orthogonalen Bohrung (13) gleiten können, dadurch gekennzeichnet, daß die Muffen (12') einen zentralen Teil (15) mit großem Durchmesser besitzen, an den sich zwei Zapfen (16) mit kleinem Durchmesser anschließen, daß die Steuerungsring aus zwei durch Schrauben (18) verbundenen ringförmigen Teilen (1a, 1b) besteht, die jeweils koaxiale Bohrungen (11) für die Aufnahme der Zapfen der Muffe (12') besitzen, und daß die Achse (10) durch eine radiale Bohrung des Rings verläuft.

2. Steuervorrichtung nach Anspruch 1, dadurch gekennzeichnet, daß der eine (1'b) der beiden den Steuerungsring bildenden ringförmigen Teile einen L-förmigen Querschnitt hat, der den Pleuelhebel teilweise überdeckt.

3. Steuervorrichtung nach einem der Ansprüche 1 oder 2, dadurch gekennzeichnet, daß der Ring (1) mit Hilfe einer zwischen der Oberseite des Pleuelhebels und der zylindrischen Muffe (12') angeordneten elastischen Scheibe (22) relativ zu der Oberseite des Pleuelhebels zentriert ist.

4. Steuervorrichtung nach einem der Ansprüche 1 bis 3, dadurch gekennzeichnet, daß die Muffe (12') aus einer Gußverbundlegierung hergestellt ist.

**Claims**

1. Control device for the variable pitch blades of the flowstraightener of the compressor of a gas turbine engine with a high pitch angle comprising a circular ring (1) actuating, through its rotation around the longitudinal axis of the engine casing, cranks (8) fixed to the variable pitch blades (5), the said cranks comprising at their ends stub axles (10) orientated radially and fitted onto the ring through the intermediary of cylindrical spiders (12') held in axial holes (11) drilled in the ring, the said stub axles being able to slide in the hole (13) in the spider drilled at right angles to the rotational axis of the said spider, characterised in that the said spiders (12') comprise a central portion (15) of large diameter and on either side journals (16) of smaller diameter, the control ring being made up of two annular parts (1a, 1b) each comprising the coaxial holes (11) to receive the journals of the spider (12'), and in that the stub axle (10) passes through a radial hole in the ring.

2. Control device in accordance with Claim 1, characterised in that one (1'b) of the annular parts forming the ring is given a cross section in the shape of an L (21) partially covering the crank.

3. Control device in accordance with either of Claims 1 or 2, characterised in that the ring (1) is centred in relation to the upper side of the cranks (8) by means of an elastic washer (22) placed between the upper side of the crank and the cylindrical spider (12').

4. Control device in accordance with any of the Claims 1 to 3, characterised in that the spider (12') is made of a moulded composite material.

FIG:1

FIG:3

FIG:4

FIG:2

FIG:5

FIG:6

FIG:7

FIG:8a

FIG:8b

FIG:8c